# EUROPÄISCHE PATENTSCHRIFT

(11) **EP 2 594 414 B1**
(45) Veröffentlichungstag und Bekanntmachung des Hinweises auf die Patenterteilung: **18.06.2014**
(21) Anmeldenummer: 11189946.4
(22) Anmeldetag: 21.11.2011
(51) Int. Cl.: B60C 1/00, C08L 7/00, C08L 9/00, C08L 21/00

(54) **Gummierter Festigkeitsträger**
Rubberised rigidity support
Support de fixation à gomme

(43) Veröffentlichungstag der Anmeldung: 22.05.2013
(73) Patentinhaber: Continental Reifen Deutschland GmbH, 30165 Hannover (DE)
(72) Erfinder: Kramer, Thomas, 32049 Herford (DE); Krüger, Jörn, 30926 Seelze (DE)
(74) Vertreter: Finger, Karsten

(56) Entgegenhaltungen:
- EP-A1- 1 607 439
- EP-A1- 1 935 937
- EP-A1- 2 039 532
- JP-A- 7 292 159
- JP-A- 2003 012 860
- JP-A- 2006 213 777
- US-A1- 2008 110 544
- US-A1- 2009 318 585
- US-A1- 2011 054 069
- US-A1- 2011 269 871

## Beschreibung

Die Erfindung betrifft einen Festigkeitsträger, insbesondere für Fahrzeugluftreifen, Gurte, Riemen und Schläuche, welcher mit einer Kautschukmischung beschichtet bzw. gummiert ist. Des Weiteren betrifft die Erfindung eine Kautschukmischung, welche für die Gummierung von Festigkeitsträgern geeignet ist, und technische Kautschukprodukte, welche einen gummierten Festigkeitsträger enthalten.

Festigkeitsträger zur Verstärkung verschiedener elastomerer Erzeugnisse sind hinreichend bekannt. So ist beispielsweise für Fahrzeugluftreifen bekannt, eine Gürtelbandage zu verwenden, die ein- oder mehrlagig ausgebildet ist, die Gürtelränder abdeckt und parallel und im wesentlichen in Umfangsrichtung verlaufende Festigkeitsträger in Form von im Gummi eingebetteten Corden enthält. Diese Gürtelbandage dient dazu, insbesondere im Hochgeschwindigkeitseinsatz, eine Erhebung des Reifen durch die im Fahrbetrieb auftretenden Fliehkräfte zu verhindern. In weiteren elastomeren Erzeugnissen, wie beispielsweise Kraftübertragungsriemen oder auch Schläuchen dienen Festigkeitsträger, insbesondere in Form von Textilauflagen oder textilen Zwischenschichten aus Geweben, Gewirken oder Gestricken, unter anderem dazu, die Lebensdauer dieser Erzeugnisse zu verbessern oder erst zu ermöglichen.

Relevant hierbei ist die Haftung der Festigkeitsträger mit den jeweils in direktem Kontakt stehenden Kautschukmischungen. Zur Haftungsverbesserung werden die Festigkeitsträger entweder mit verschiedenen Haftmitteln, wie beispielsweise Resorcinformaldehydlatex (RFL) oder definierten Haftmischungen vorbehandelt.

In diesen Haftmischungen sind Weichmacher eine wichtige Klasse von Zuschlagstoffen. Weichmacher werden der Haftmischung zugesetzt, um die Fließeigenschaften der Mischung zu verbessern (Energieeinsparung bei der Verarbeitung, Vermeidung von Energiespitzen), die Füllstoffdispersion zu verbessern, und vor allem das Klebverhalten zu verbessern. Gleichzeitig sollen durch diese Maßnahme die physikalischen Eigenschaften der Haftmischung und am Ende ebenso des elastomeren Erzeugnisses nicht verschlechtert werden. Zu der Gruppe der Weichmacher werden vielfach auch die flüssigen Polymere gezählt, d.h. Polymere die ein niedriges Molekulargewicht, meist maximal 100.000 g/mol, besitzen.
Die Verwendung von flüssigem Polymer, insbesondere in rußhaltigen Kautschukmischungen, zur Beschichtung von Reifencorden oder zur verbesserten Haftung an Metalloberflächen bzw. Metallplatten ist beispielsweise aus JP 2008184551A,
US 4,218,349 B1, GB 2041945 A oder JP 55133403 A bekannt. Üblicherweise werden in derartigen Haftmischungen giftige Cobaltverbindungen als Haftvermittler verwendet. Größere Mengen von Cobaltverbindungen, wie sie in der industriellen Produktion der Haftmischungen oft zu finden sind, sind für viele Lebewesen giftig und führen zu Haut-, Lungen-, Magenerkrankungen, Leber-, Herz-, Nierenschäden und Krebsgeschwüren. Des Weiteren reduzieren Cobaltverbindungen in einer Kautschukmischung insbesondere die Ermüdungsbeständigkeit der Mischung.

Aufgabe der vorliegenden Erfindung ist es nun, einen Festigkeitsträger bereitzustellen, der mit einer Gummierungsschicht teilweise oder vollständig ummantelt ist und diese Gummierungsschicht eine im Vergleich zum Stand der Technik verbesserte Haftung zwischen Gummierungsschicht und Festigkeitsträger aufweist. Wichtig hierbei ist, dass die verbesserte Haftung auch nach einem längeren Zeitraum vorhanden ist, d.h. eine optimierte Alterungsbeständigkeit vorliegt. Weiterhin ist eine deutliche Reduzierung der Cobaltverbindungen aus den oben genannten Gründen wünschenswert.

Gelöst wird diese Aufgabe dadurch, dass der Festigkeitsträger mit wenigstens einer Gummierungsschicht teilweise oder vollständig ummantelt ist, wobei die Gummierungsschicht aus einer Kautschukmischung aufgebaut ist welche folgende Bestandteile enthält:
- wenigstens einen Dienkautschuk und
- wenigstens ein funktionalisiertes flüssiges Polymer mit einem mittleren Molgewicht M_{w} zwischen 10000 und 100000 g/mol und
- wenigstens eine Kieselsäure und
- weitere Zusatzstoffe.

Überraschenderweise wurde gefunden, dass sich eine deutlich verbesserte Haftung des Festigkeitsträgers ergibt, wenn er mit einer Gummierungsschicht versehen ist, die wenigstens ein funktionalisiertes flüssiges Polymer mit einem mittleren Molgewicht M_{w} zwischen 10000 und 100000 g/mol (in Worten: zwischen Zehntausend und Hunderttausend Gramm pro Mol) und wenigstens eine Kieselsäure enthält. Dadurch lässt sich der Gehalt an Cobaltverbindungen deutlich reduzieren. Die gute Haftungseigenschaft bleibt auch nach einem längeren Zeitraum erhalten.

Bei dem Festigkeitsträger handelt es sich bevorzugt um einen Cord, welcher aus textilem Material oder aus Metall aufgebaut sein kann. Textile Corde können beispielsweise aus Polyamid, Aramid, Polyester, Glasfasern, Kohlefasern, Polyetherketon (PEEK), Polytehylen-2,6-naphthalat (PEN), Basalt oder Polybenzoxazole (PBO) aufgebaut sein. Bevorzugt handelt es sich bei dem Festigkeitsträger um einen Metallcord, vorzugsweise einen Stahlcord, welcher in einer besonders bevorzugten Ausführungsform vermessingt, d.h. mit einer Schicht aus Messing versehen, ist.

Die Kautschukmischung der Gummierungsschicht enthält zumindest einen Dienkautschuk. Vorzugsweise ist dieser ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk, wobei besonders gute Eigenschaften bei der Verwendung wenigstens eines natürlichen Polyisoprens erzielt werden.

Der lösungspolymerisierte Styrolbutadienkautschuk kann in einer besonderen Ausführungsform hydriert sein und / oder mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage
Der Dienkautschuk wird bevorzugt in Mengen von 10 bis 100 phr, besonders bevorzugt in Mengen von 30 bis 100 phr, ganz besonders bevorzugt in Mengen von 50 bis 100 phr verwendet.
Besonders gute Eigenschaften ergeben sich, wenn die Kautschukmischung wenigstens 50 phr, bevorzugt 70 bis 100 phr, besonders bevorzugt 80 bis 100 phr, wenigstens eines natürlichen und / oder synthetischen Polyisoprens enthält. Gute Ergebnisse werden auch erzielt, wenn die Kautschukmischung 100 phr natürliches Polyisopren enthält.

In der Kautschukmischung können aber auch noch weitere polare oder unpolare Kautschuke enthalten sein, wie beispielsweise Flüssigkautschuke und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.
Der weitere Kautschuk kann bevorzugt in Mengen von 0 bis 20 phr, besonders in Mengen von 0 bis 10 phr verwendet werden.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung der Gummierungsschicht für den erfindungsgemäßen Festigkeitsträger enthält wenigstens eine Kieselsäure, welche oft auch als heller Füllstoff bezeichnet wird.

Die in der Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche größer oder gleich 50 m²/g, bevorzugt zwischen 50 und 320 m²/g, besonders bevorzugt zwischen 100 und 250 m²/g, und einer CTAB-Oberfläche zwischen 50 und 300 m²/g, bevorzugt zwischen 50 und 250 m²/g und besonders bevorzugt zwischen 80 und 250 m²/g, eingesetzt.
Besonders gute Ergebnisse lassen sich erzielen, wenn die CTAB-Oberfläche der Kieselsäure zwischen 150 und 250 m²/g beträgt.
Die Menge der Kieselsäure beträgt bevorzugt 1 bis 80 phr, besonders bevorzugt 2 bis 60 phr und ganz besonders bevorzugt 5 bis 55 phr.

Falls ein Kupplungsagens, in Form von Silan oder einer siliziumorganischen Verbindung, verwendet wird, so beträgt die Menge des Kupplungsagens 0 bis 20 phr, bevorzugt 0,1 bis 15 phr, besonders bevorzugt 0,5 bis 10 phr. Als Kupplungsagenzien können dabei alle der fachkundigen Person bekannten Kupplungsagenzien verwendet werden.

Die Kautschukmischung der Gummierungsschicht kann des Weiteren zumindest einen dunklen Füllstoff enthalten. Die Gesamtmenge an Füllstoff kann somit nur aus hellem Füllstoff oder aus einer Kombination von hellen und dunklen Füllstoffen bestehen.

Der Ruß wird in einer bevorzugten Ausführungsform in Mengen von 0 bis 80 phr, besonders bevorzugt in Mengen von 0 bis 70 phr, ganz besonders bevorzugt in Mengen von 0 bis 60 phr, bevorzugt wenigstens aber in Mengen von 0,1 phr, besonders bevorzugt wenigstens aber in Mengen von 0,5 phr, eingesetzt. In einer besonders bevorzugten Ausführungsform hat der Ruß eine Iodzahl, gemäß ASTM D 1510, die auch als Iodabsorptionszahl bezeichnet wird, größer oder gleich 20 g/kg, bevorzugt größer oder gleich 35 g/kg, besonders bevorzugt größer oder gleich 50 g/kg, ganz besonders bevorzugt größer oder gleich 75 g/kg und eine DBP-Zahl größer oder gleich 60 cm³/100g, bevorzugt größer oder gleich 80 cm³/100g. Die DBP-Zahl gemäß ASTM D 2414 bestimmt das spezifische Absorptionsvolumen eines Rußes oder eines hellen Füllstoffes mittels Dibutylphthalat.

Die Kautschukmischung kann neben Kieselsäure und Ruß auch noch weitere Füllstoffe wie Aluminiumhydroxid, Schichtsilikate, Kalk, Kreide, Stärke, Magnesiumoxid, Titandioxid, Kautschukgele, Kurzfasern usw. in beliebigen Kombinationen enthalten.

Erfindungswesentlich ist, dass die Kautschukmischung wenigstens ein funktionalisiertes flüssiges Polymer mit einem mittleren Molgewicht M_{w} zwischen 10000 und 100000 g/mol enthält. Bevorzugt enthält sie 1 bis 100 phr, besonders bevorzugt 1 bis 80 phr, ganz besonders bevorzugt 5 bis 50 phr, zumindest eines flüssigen funktionalisierten Polymers mit einem mittleren Molgewicht M_{w} zwischen 10000 und 100000 g/mol, bevorzugt zwischen 20000 und 50000 g/mol.
Ein Molekulargewicht zwischen 10000 und 100000 g/mol ist für die optimale Anbindung mittels des Schwefels an das Polymernetzwerk wichtig. Flüssige Polymere mit niedrigeren Molekulargewichten verhalten sich in der Regel wie ein Öl und zeigen keine oder nur eine gering ausgeprägte Anbindung an das Netzwerk.

Die Molekulargewichte sind hierbei mittels Gelpermeationschromatographie (GPC) bestimmt worden.
Das flüssige Polymer wird im Rahmen der vorliegenden Erfindung nicht -wie oft üblich - als Weichmacher verwendet, sondern als Polymer betrachtet, so dass die Menge an Dienkautschuk, gegebenenfalls weiteren Kautschuken und dem funktionalisierten flüssigen Polymer immer 100 phr betragen muss.
Bei dem flüssigen Polymer handelt es sich in einer besonders gut geeigneten Ausführungsform um einen flüssigen Polyisoprenkautschuk.
Das flüssige Polymer ist bevorzugt mit Hydroxylgruppen und / oder Epoxygruppen und / oder Siloxangruppen und / oder Aminogruppen und / oder Phtalocyaningruppen und / oder Aminosiloxangruppen und / oder mit (Meth-)Acryl-Gruppen und / oder mit Carboxyl-Gruppen vollständig oder teilweise funktionalisiert. Gute Ergebnisse zeigen sich, wenn das flüssige Polymer mit Carboxylgruppen funktionalisiert ist.

Wie eingangs erwähnt, kann die Menge an Cobaltverbindungen im Vergleich zu dem bisherigen Stand der Technik deutlich reduziert werden. Daher enthält die Gummierungsschicht maximal 1,5 phr Cobaltverbindungen. In einer besonders bevorzugten Ausführungsform ist die Kautschukmischung frei von Cobaltverbindungen, d.h. die Menge an Cobaltverbindungen beträgt 0 phr.

Es können in der Kautschukmischung noch 0 bis 60 phr, bevorzugt 0,1 bis 50 phr, bevorzugt 0,1 bis 40 phr, wenigstens eines Weichmachers vorhanden sein. Dieser Weichmacher ist ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder Terpenen und / oder Biomass-To-Liquid-Ölen (BTL-Öle).

Für die verbesserte Haftung der Gummierungsschicht und insbesondere für die bessere Verarbeitbarkeit während der Herstellung des Endproduktes, bspw. des Reifens, ist insbesondere die Verwendung von Harzen zweckmäßig.

Weiterhin enthält die Kautschukmischung der Gummierungsschicht noch weitere Zusatzstoffe.
Weitere Zusatzstoffe beinhaltet im Wesentlichen das Vernetzungssystem (Vernetzer, Schwefelspendern und / oder elementarer Schwefel, Beschleuniger und Verzögerer), Ozonschutzmittel, Alterungsschutzmittel, Mastikationshilfsmittel, Verarbeitungshilfsmittel und weitere Aktivatoren.
Der Mengenanteil der Gesamtmenge an weiteren Zusatzstoffen beträgt 3 bis 150 phr, bevorzugt 3 bis 100 phr und besonders bevorzugt 5 bis 80 phr.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt, mit der der Festigkeitsträger teilweise oder vollständig ummantelt wird. Dies geschieht durch Kalandieren der Kautschukmischung, bei der aus der Kautschukmischung dünne Platten hergestellt werden, welche oben und unten auf den festigkeitsträger gebracht werden. Dabei erfolgt die Penetration der Kautschukmischung an und in die Festigkeitsträger. Nach Zuschnitt werden diese mit der Kautschukmischung versehenen Festigkeitsträger wie der fachkundigen Person bekannt zum Herstellen der benötigten Endprodukte weiterverwendet.

Der Erfindung liegt weiterhin die Aufgabe zu Grunde, einen Kautschukartikel bereitzustellen, der wenigstens einen Festigkeitsträger enthält, welcher mit einer Gummierungsschicht teilweise oder vollständig ummantelt ist und wobei die Gummierungsschicht aus einer Kautschukmischung mit den oben bereits erwähnten Bestandteilen aufgebaut ist. Bei dem Kautschukartikel handelt es sich bevorzugt um einen Fahrzeugreifen. Der mit der Gummierungsschicht versehene Festigkeitsträger kann ebenso in Riemen, Gurten und Schläuchen zum Einsatz kommen. Dieser Kautschukartikel zeichnet sich durch eine besonders gute Haftung des Festigkeitsträgers aus, die auch bei längerem Gebrauch erhalten bleibt.

Die erfindungsgemäße Kautschukmischung wird zur Herstellung von Reifen, und zur Herstellung von Riemen, Gurten und Schläuchen zu verwendet.
Bei dem Reifen kann es sich um einen LKW-Reifen, einen PKW-Reifen oder um einen Zweiradreifen handeln. Insbesondere dient die Kautschukmischung zur Herstellung wenigstens eines inneren Bauteils eines Reifens.
Innere Bauteile eines Reifens sind vor allem Seitenwand, Innenseele, Apex, Gürtel, Schulter, Gürtelprofil, Squeegee, Karkasse, Wulstverstärker und / oder Bandage.

Die Erfindung soll nun anhand von Vergleichs- und Ausführungsbeispielen, die in Tabellen 1 bis 3 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Im oberen Teil der Tabellen sind dabei die Mischungszusammensetzungen dargestellt, während im unteren Teil der Tabellen die dazugehörigen Haftungseigenschaften illustriert werden.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Die Bestimmung der Haftung (Rubber Coverage) und der Auszugskraft (Pull-out-Force) erfolgte gemäß D2229-10.

**Tabelle 1**

| **Bestandteile** | **Einheit** | **V1** | **V2** | **E1** | **E2** |
|---|---|---|---|---|---|
| NR | phr | 80 | 70 | 70 | 70 |
| BR^{a} | phr | 20 | 20 | 20 | 20 |
| Kieselsäure^{b} | phr | 55 | 55 | 55 | 55 |
| Flüssiges Polymer^{c} | phr | -- | 10 | -- | -- |
| Flüssiges Polymer^{d} | phr | -- | -- | 10 | -- |
| Flüssiges Polymer^{e} | phr | -- | -- | -- | 10 |
| Harze | phr | 10,4 | 10,4 | 10,4 | 10,4 |
| Co-Verbindung | phr | 0,36 | 0,36 | 0,36 | 0,36 |
| Coverage bei RT | % | 86 | 88 | 87,5 | 85 |
| Pull-out Force | N | 1064 | 987 | 1051 | 1049 |

| **Nach Alterung (5 Tage bei 105°C, Dampf)** | | | | | |
|---|---|---|---|---|---|
| Coverage bei RT | % | 81,5 | 82 | 85 | 87 |
| Pull-out Force | N | 705 | 762 | 868 | 888 |

| | | | | | |
|---|---|---|---|---|---|
| ^{a} BR mit cis-Anteil von größer 80 Gew. -%; ^{b} VN3, Fa. Evonik Degussa; ^{c} flüssiger unfunktionalisierter Isoprenkautschuk, LIR 30, Fa. Kuraray; ^{d} flüssiger carboxylierter Isoprenkautschuk, LIR 403, Fa. Kuraray; ^{e} flüssiger carboxylierter Isoprenkautschuk, LIR 410, Fa. Kuraray. V1, V2, E1 und E2 enthalten darüber hinaus in Summe noch etwa 20 bis 22 phr Weichmacher, Vulkanisationssystem, Zinkoxid und sonstige Hilfsmittel. Des Weiteren noch 4 phr Silan und 4 phr Ruß. | | | | | |

**Tabelle 2**

| **Bestandteile** | **Einheit** | **V3** | **V4** | **E3** |
|---|---|---|---|---|
| NR | phr | 100 | 90 | 90 |
| Kieselsäure^{b} | phr | 8 | 8 | 8 |
| Ruß, N326 | phr | 53 | 53 | 53 |
| Flüssiges Polymer^{c} | phr | -- | 10 | -- |
| Flüssiges Polymer^{e} | phr | -- | -- | 10 |
| Harze | phr | 7,25 | 7,25 | 7,25 |
| Co-Verbindung | phr | 0,65 | 0,65 | 0,65 |
| Coverage bei RT | % | 89,5 | 89 | 88 |
| Pull-out Force | N | 576 | 590 | 648 |

| **Nach Alterung (5 Tage bei 105°C, Dampf)** | | | | |
|---|---|---|---|---|
| Coverage bei RT | % | 84 | 81,5 | 80,5 |
| Pull-out Force | N | 552 | 513 | 588 |

| | | | | |
|---|---|---|---|---|
| ^{b} VN3, Fa. Evonik Degussa; ^{c}flüssiger unfunktionalisierter Isoprenkautschuk, LIR 30, Fa. Kuraray; ^{e}flüssiger carboxylierter Isoprenkautschuk, LIR 410, Fa. Kuraray V3, V4 und E3 enthalten darüber hinaus in Summe noch etwa 20 bis 22 phr Weichmacher, Vulkanisationssystem, Zinkoxid und sonstige Hilfsmittel. | | | | |

**Tabelle 3**

| **Bestandteile** | **Einheit** | **V5** | **V6** | **E4** | **E5** |
|---|---|---|---|---|---|
| NR | phr | 80 | 70 | 70 | 70 |
| BR^{a} | phr | 20 | 20 | 20 | 20 |
| Kieselsäure^{b} | phr | 55 | 55 | 55 | 55 |
| Flüssiges Polymer^{e} | phr | -- | -- | 10 | 10 |
| Harze | phr | 10,4 | 10,4 | 10,4 | 10,4 |
| Co-Verbindung | phr | 0,36 | -- | 0,36 | -- |
| Coverage bei RT | % | 87,5 | 87,5 | 87 | 86 |
| Pull-out Force | N | 1003 | 989 | 1018 | 962 |

| **Nach Alterung (5 Tage bei 105°C, Dampf)** | | | | | |
|---|---|---|---|---|---|
| Coverage bei RT | % | 70,5 | 68 | 68,5 | 66,1 |
| Pull-out Force | N | 589 | 456 | 630 | 575 |

| | | | | | |
|---|---|---|---|---|---|
| ^{a} BR mit cis-Anteil von größer 80 Gew. -%; ^{b} VN3, Fa. Evonik Degussa; ^{e} flüssiger carboxylierter Isoprenkautschuk, LIR 410, Fa. Kuraray. V5, V6, E4 und E5 enthalten darüber hinaus in Summe noch etwa 20 bis 22 phr Weichmacher, Vulkanisationssystem, Zinkoxid und sonstige Hilfsmittel. Des Weiteren noch 4 phr Silan und 4 phr Ruß. | | | | | |

Anhand der Tabellen 1 bis 3 zeigt sich, dass durch die Verwendung eines flüssigen funktionalisierten Polymers in Kombination mit wenigstens einer Kieselsäure sich eine deutlich verbesserte Haftung ergibt, welche auch bei Alterung, d.h. nach längerem Gebrauch, erhalten bleibt. Gleichzeitig ist insbesondere anhand Tabelle 3 erkennbar, dass sich die Menge an Cobalt-Verbindungen reduzieren bzw. gänzlich vermeiden lässt, ohne dass nennenswerte Einbußen hinsichtlich der Haftung und der Alterungsbeständigkeit zu verzeichnen sind. Die weiteren physikalischen Eigenschaften der Mischungen aus den Tabellen 1 bis 3, wie Shore-Härte, etc., sind grundsätzlich auf einem jeweils vergleichbaren Niveau verblieben.

## Patentansprüche

1. Festigkeitsträger, **dadurch gekennzeichnet, dass** er mit wenigstens einer Gummierungsschicht teilweise oder vollständig ummantelt ist, wobei die Gummierungsschicht aus einer Kautschukmischung aufgebaut ist welche folgende Bestandteile enthält:
- wenigstens einen Dienkautschuk und
- wenigstens ein funktionalisiertes flüssiges Polymer mit einem mittleren Molgewicht M_{w} zwischen 10000 und 100000 g/mol und
- wenigstens eine Kieselsäure und
- weitere Zusatzstoffe.

2. Festigkeitsträger nach Anspruch 1, **dadurch gekennzeichnet, dass** der Festigkeitsträger als Cord ausgebildet ist.

3. Festigkeitsträger nach Anspruch 1 oder 2, **dadurch gekennzeichnet, dass** der Dienkautschuk natürliches und / oder synthetisches Polyisopren ist.

4. Festigkeitsträger nach einem der Ansprüche 1 bis 3, **dadurch gekennzeichnet, dass** das flüssige Polymer ein flüssiger Isoprenkautschuk ist.

5. Festigkeitsträger nach einem der Ansprüche 1 bis 4, **dadurch gekennzeichnet, dass** das flüssige Polymer mit Hydroxylgruppen und / oder Epoxygruppen und / oder Siloxangruppen und / oder Aminogruppen und / oder Phtalocyaningruppen und / oder Aminosiloxangruppen und / oder mit (Meth-)Acryl-Gruppen und / oder mit Carboxyl-Gruppen vollständig oder teilweise funktionalisiert ist.

6. Festigkeitsträger nach einem der Ansprüche 1 bis 5, **dadurch gekennzeichnet, dass** die Kautschukmischung zusätzlich wenigstens einen Ruß enthält.

7. Kautschukartikel, **dadurch gekennzeichnet, dass** der Kautschukartikel wenigstens einen Festigkeitsträger enthält, der mit wenigstens einer Gummierungsschicht teilweise oder vollständig ummantelt ist, wobei die Gummierungsschicht aus einer Kautschukmischung aufgebaut ist, welche die Bestandteile gemäß einem der Ansprüche 1 bis 6 enthält.

8. Kautschukartikel nach Anspruch 7, **dadurch gekennzeichnet, dass** der Kautschukartikel ein Fahrzeugreifen ist.

## Claims

1. Reinforcing element, **characterized in that** it has been to some extent or entirely coated with at least one rubberizing layer, where the rubberizing layer is composed of a rubber mixture which comprises the following constituents:
- at least one diene rubber and
- at least one functionalized liquid polymer with average molar mass M_{w} from 10 000 to 100 000 g/mol and
- at least one silica and
- other additives.

2. Reinforcing element according to Claim 1, **characterized in that** the reinforcing element takes the form of cord.

3. Reinforcing element according to Claim 1 or 2, **characterized in that** the diene rubber is natural and/or synthetic polyisoprene.

4. Reinforcing element according to any of Claims 1 to 3, **characterized in that** the liquid polymer is a liquid isoprene rubber.

5. Reinforcing element according to any of Claims 1 to 4, **characterized in that** the liquid polymer has been functionalized entirely or to some extent with hydroxy groups and/or epoxy groups and/or siloxane groups and/or amino groups and/or phthalocyanine groups and/or aminosiloxane groups and/or with (meth)acrylic groups and/or with carboxy groups.

6. Reinforcing element according to any of Claims 1 to 5, **characterized in that** the rubber mixture also comprises at least one carbon black.

7. Rubber item, **characterized in that** the rubber item comprises at least one reinforcing element which has been coated to some extent or entirely with at least one rubberizing layer, where the rubberizing layer is composed of a rubber mixture which comprises the constituents according to any of Claims 1 to 6.

8. Rubber item according to Claim 7, **characterized in that** the rubber item is a tyre.

## Revendications

1. Renfort, **caractérisé en ce qu'**il est entouré partiellement ou complètement par au moins une couche de caoutchouc, la couche de caoutchouc étant constituée d'un mélange de caoutchouc qui contient les composants suivants :
au moins un caoutchouc diène,
au moins un polymère liquide fonctionnalisé d'un poids moléculaire moyen M_{w} compris entre 10 000 et 100 000 g/mole,
au moins un acide silicique et
d'autres additifs.

2. Renfort selon la revendication 1, **caractérisé en ce que** le renfort est configuré en fil.

3. Renfort selon les revendications 1 ou 2, **caractérisé en ce que** le caoutchouc diène est un polyisoprène naturel et/ou un polyisoprène synthétique.

4. Renfort selon l'une des revendications 1 à 3, **caractérisé en ce que** le polymère liquide est un caoutchouc isoprène liquide.

5. Renfort selon l'une des revendications 1 à 4, **caractérisé en ce que** le polymère liquide est fonctionnalisé complètement ou partiellement par des groupes hydroxyle, des groupes époxy, des groupes silane, des groupes amino, des groupes phtalocyanine, des groupes aminosiloxane, des groupes méthacryle et/ou des groupes carboxyle.

6. Renfort selon l'une des revendications 1 à 5, **caractérisé en ce que** le mélange de caoutchouc contient de plus au moins un noir de carbone.

7. Article en caoutchouc, **caractérisé en ce que** l'article en caoutchouc contient au moins un renfort entouré partiellement ou complètement par au moins une couche de caoutchouc, la couche de caoutchouc étant constituée d'un mélange de caoutchouc qui contient les composants selon l'une des revendications 1 à 6.

8. Article en caoutchouc selon la revendication 7, **caractérisé en ce que** l'article en caoutchouc est un bandage pour roue de véhicule.
